# EUROPEAN PATENT SPECIFICATION

(11) **EP 3 611 976 B1**
(45) Date of publication and mention of the grant of the patent: **08.12.2021**
(21) Application number: 17907412.5
(22) Date of filing: 27.04.2017
(51) Int. Cl.: H04W 72/04, H04W 72/12

(54) **WIRELESS COMMUNICATION METHOD AND DEVICE**
DRAHTLOSKOMMUNIKATIONSVERFAHREN UND -VORRICHTUNG
PROCÉDÉ ET DISPOSITIF DE COMMUNICATION SANS FIL

(43) Date of publication of application: 19.02.2020
(73) Proprietor: GUANGDONG OPPO MOBILE TELECOMMUNICATIONS CORP., LTD., Wusha, Chang'an Dongguan, Guangdong 523860 (CN)
(72) Inventor: YANG, Ning, Dongguan Guangdong 523860 (CN); LIU, Jianhua, Dongguan Guangdong 523860 (CN)
(74) Representative: Manitz Finsterwald Patent- und Rechtsanwaltspartnerschaft mbB
(86) International application number: PCT/CN2017/082228
(87) International publication number: WO 2018/195867

(56) References cited:
- EP-A1- 2 958 387
- WO-A1-2015/122739
- CN-A- 102 149 080
- CN-A- 102 685 895
- US-A1- 2015 250 001
- INTEL CORPORATION: "Enhancements of SR/BSR in NR", 3GPP DRAFT; R2-1703422 SR BSR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, US; 20170303 - 20170307 3 April 2017 (2017-04-03), XP051245278, Retrieved from the Internet: URL:http://www.3gpp.org/ftp/Meetings_3GPP_ SYNC/RAN2/Docs/ [retrieved on 2017-04-03]
- NOKIA: "Buffer Reporting for E-UTRAN", 3GPP DRAFT; R2-060829 BUFFER REPORTING FOR E-UTRAN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Athens, Greece; 20060323, 23 March 2006 (2006-03-23), XP050130775, [retrieved on 2006-03-23]

## Description

### TECHNICAL FIELD

The present application relates to the field of communications and, more particularly, to a wireless communication method and a wireless communication device.

### BACKGROUND

In the existing long term evolution (LTE) system, a user equipment (UE) needs to inform a base station through a buffer status report (BSR) how much data needs to be sent in its uplink buffer, so that the base station determines how many uplink resources should be allocated to the UE.

In the 5th generation communication system (5G), there is a higher requirement for the communication performance. EP2958387A1 discloses a transmission data processing method to avoid a defect that air interface resources cannot be utilized appropriately and effectively when a granularity of a reported buffer status report is per logic channel group. "Enhancements of SR/BSR in NR", 3GPP DRAFT; R2-1703422, vol. RAN WG2 discloses whether more information may be desirable in SR and BSR considering the number of different services UEs are supporting. US 2015/250001 A1 discloses a method for determining a priority value of each of multiple packets based on a position of a video frame in a group of pictures and a type of the video frame.

### SUMMARY

It is an object of the present invention to provide a wireless communication method and a wireless communication device with which a higher communication performance can be achieved. This object is solved by the subject matter of the independent claims.

The present invention is defined by the subject-matter of the independent claims. Advantageous embodiments are defined in the dependent claims.

### BRIEF DESCRIPTION OF THE DRAWINGS

In order to more clearly illustrate the embodiments of the present application, the drawings to be used in the embodiments will be briefly described below. Obviously, the drawings in the following description are only some embodiments of the present invention, and those skilled in the art can obtain other drawings according to these drawings without any creative efforts.
FIG. 1 is a schematic diagram of a wireless communication system according to an embodiment of the present application.
FIG. 2 is a schematic diagram of a format of a long BSR according to an embodiment of the present application.
FIG. 3 is a schematic diagram of a format of a short BSR or truncated BSR according to an embodiment of the present application.
FIG. 4 is a schematic flowchart of a wireless communication method according to an embodiment of the present application.
FIG. 5 is a schematic block diagram of a terminal device according to an embodiment of the present application.
FIG. 6 is a schematic block diagram of a network device according to an embodiment of the present application.
FIG. 7 is a schematic block diagram of a system chip according to an embodiment of the present application.
FIG. 8 is a schematic block diagram of a communication device according to an embodiment of the present application.

### DESCRIPTION OF EMBODIMENTS

The technical solutions in the embodiments of the present application will be described with reference to the attached drawings in the embodiment of the present application. It is obvious that the described embodiments are a part of the embodiments of the present application, and not all of the embodiments.

The technical solutions of the embodiment of the present application can be applied to various communication systems, for example, a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an LTE Frequency Division Duplex (FDD) system, an LTE Time Division Duplex (TDD), a Universal Mobile Telecommunication System (UMTS), a Worldwide Interoperability for Microwave Access (WiMAX) communication system, or a future 5G system, etc.

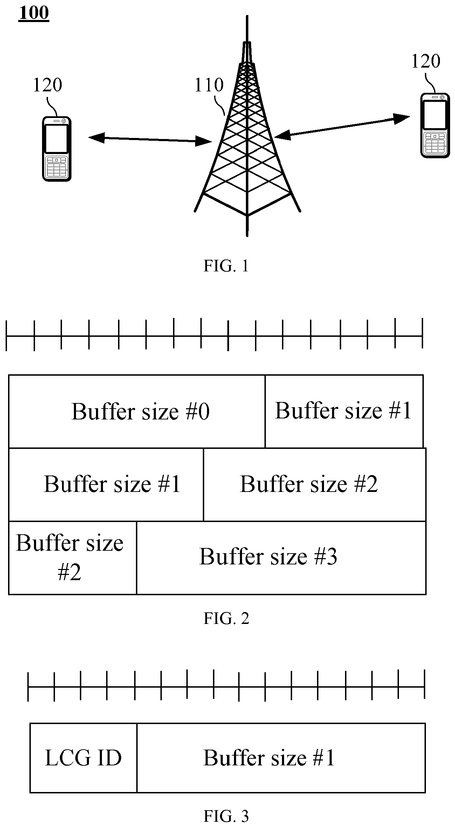

FIG. 1 shows a wireless communication system 100 that is applied to an embodiment of the present application. The wireless communication system 100 may include a network device 110. The network device 100 may be a device that communicates with a terminal device. The network device 100 may provide communication coverage for a particular geographic area and may communicate with terminal devices (e.g., UEs) located within the coverage area. In an implementation, the network device 100 may be a Base Transceiver Station (BTS) in a GSM system or a CDMA system, or may be a NodeB (NB) in a WCDMA system, or may be an Evolutional Node B (eNB or eNodeB) in an LTE system, or a wireless controller in a Cloud Radio Access Network (CRAN), or the network device may be a relay station, an access point, an in-vehicle device, a wearable device, or a network side device in a future 5G network or a network device in a future evolutional Public Land Mobile Network (PLMN).

The wireless communication system 100 also includes at least one terminal device 120 located within the coverage of the network device 110. The terminal device 120 may be mobile or fixed. In an implementation, the terminal device 120 may refer to an access terminal, a user equipment (UE), a subscriber unit, a subscriber station, a mobile station, a mobile platform, a remote station, a remote terminal, a mobile device, a user terminal, a terminal, and a wireless communication device, a user agent, or a user apparatus. The access terminal may be a cellular phone, a cordless phone, a Session Initiation Protocol (SIP) phone, a Wireless Local Loop (WLL) station, a Personal Digital Assistant (PDA), a handheld device with a wireless communication function, a computing device or other processing devices connected to wireless modems, an in-vehicle device, a wearable device, a terminal device in the future 5G network, and the like.

In an implementation, device to device (D2D) communication can be performed between terminal devices 120.

In an implementation, the 5G system or network may also be referred to as a New Radio (NR) system or network.

FIG. 1 exemplarily illustrates a network device and two terminal devices. In an implementation, the wireless communication system 100 may include a plurality of network devices and other numbers of terminal devices may be included within the coverage of each network device, which will not be limited by the embodiment of the present application.

In an implementation, the wireless communication system 100 may further include other network entities, such as a network controller, a mobility management entity, which will not be limited by the embodiment of the present application.

It should be understood that terms "system" and "network" herein are used interchangeably. The term "and/or" herein is merely an association describing associated objects, and indicates that there may be three relationships, for example, A and/or B may indicate that A exists separately, both A and B exist, B exists separately. In addition, the character "/" herein generally indicates that the contextual object is in an "or" relationship.

In the wireless communication system shown in FIG. 1, the terminal device may establish a large number of radio bearers (RBs) according to different services, where each radio bearer may correspond to a logical channel.

If a terminal device reports a BSR for each logical channel, it will bring a lot of signaling overhead. To avoid this, a Logical Channel Group (LCG) may be introduced, and each logical channel group may include at least one logical channel. In an implementation, the terminal device may report the BSR based on the logical channel group.

In an implementation, quality of service (QoS) corresponding to a logical channel that is included in each logical channel group is the same or similar.

In an implementation, logical channels established by the terminal device may be divided into four logical channel groups.

In an implementation, the BSR can be reported through a BSR MAC control unit.

When a BSR is reported for a logical channel group, multiple formats may be employed, for example, a long BSR, a short BSR, or a truncated BSR may be used.

Buffer sizes of multiple LCGs can be reported in the long BSR. For example, as shown in FIG. 2, four buffer size domains are included, corresponding to LCG IDs 0-3. Namely, in this format, buffer sizes of all LCGs are reported to the network device.

In a short BSR or a truncated BSR, a buffer size of one LCG can be reported, for example, as shown in FIG. 3.

A short BSR is used when there is only one LCG needs to report a BSR. A truncated BSR can be used when the buffer size of one of the plurality of LCGs needs to be reported, considering the resource issue.

In an implementation, a BSR MAC control unit may correspond to a MAC subheader, where a value in the MAC subheader corresponding to a BSR may have the following corresponding relationship as shown in Table 1 below.

**Table 1**

| Index | LCID values |
|---|---|
| 00000 | CCCH |
| 00001-01010 | Identify of the logical channel |
| 01011-11000 | Reserved |
| 11001 | Extended Power Headroom Report |
| 11011 | C-RNTI |
| 11100 | Truncated BSR |
| 11101 | Short BSR |
| 11110 | Long BSR |
| 11111 | Padding |

It should be understood that although the foregoing describes that the BSR can be reported by taking a logical channel group as a unit, the embodiment of the present application is not limited thereto. For example, the BSR can also be reported by taking a logical channel as a unit.

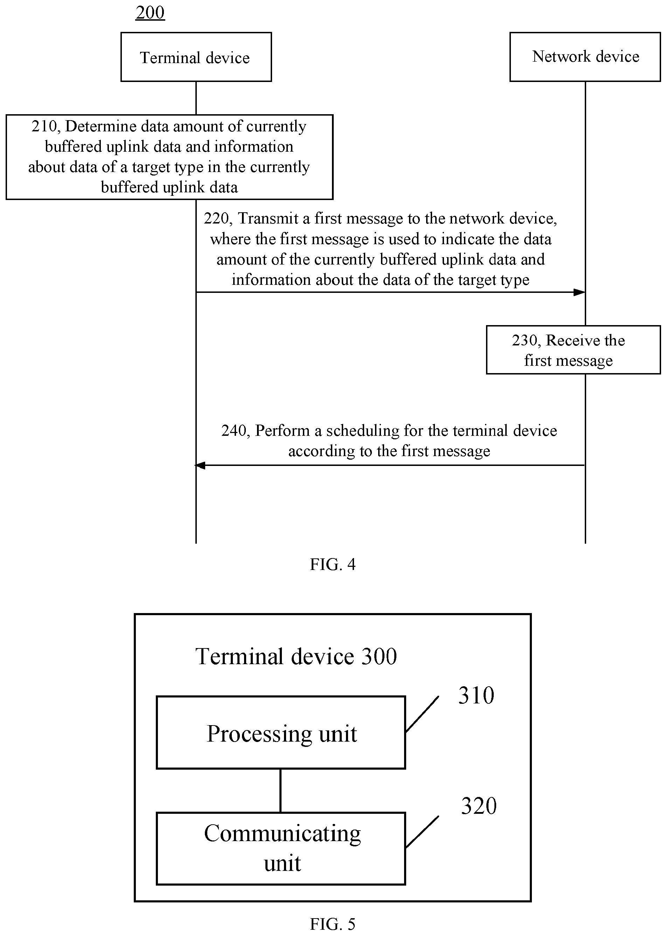

FIG. 4 is a schematic flowchart of a wireless communication method 200 according to an embodiment of the present application. The method 200 may be optionally applied to the system shown in FIG. 1, but is not limited thereto. As shown in FIG. 4, at least part of the contents of the method 200 is as follows.

In 210, a terminal device determines data amount of currently buffered uplink data and information about data of a target type in the currently buffered uplink data.

The information about the data of the target type includes a location of the data of the target type in the logical channel in which the data of the target type is located, where the location of the data of the target type in the logical channel in which the data of the target type is located is configured to indicate data amount in the logical channel in which the data of the target type is located before the data of the target type.

In an implementation, the information about the data of the target type further includes at least one of the following:
1) information about whether the currently buffered uplink data includes the data of the target type, specifically, whether the data of the target type is included may be indicated by a field, for example, the field "1" indicates that the data of the target type is included, and the field "0" indicates that the data of the target type is not included;
2) the data amount of the data of the target type, where the data amount may be the amount of data of the data of the target type in a certain logical channel or a logical channel group;
3) a logical channel or a logical channel group in which the data of the target type is located, where by indicating the logical channel or the logical channel group in which the data of the target type is located, a priority scheduling of the logical channel or logical channel group can be achieved;
4) a location of the data of the target type in the logical channel in which the data of the target type is located, where the location of the data of the target type in the logical channel in which the data of the target type is located is configured to indicate a sum of the data amount in the logical channel in which the data of the target type is located before the data of the target type and the data amount of the data of the target type, or be configured to indicate a resource required to be scheduled for scheduling the data of the target type.

In an implementation, in the encoding process of the media service, there may be three kinds of frames, namely, an intra-coded frame (I-frame), a predictive-frame (P-frame), or a bidirectional interpolated prediction frame (B-frame). The I-frame is a completely encoded frame, the P-frame is a frame generated by taking a previous I-frame as a reference and contains only a code of differential part, and the B-frame is a frame encoded by taking a previous frame and a later frame as references.

The priority of the I-frame is higher than that of the P-frame and that of the B-frame.

The data of the target type in the embodiment of the present application is data of the type of I-frame.

Of course, the data of the target type in the non-claimed example of the present application may also be other data types, and the type may be a type of service with higher priority.

In an implementation, the first message is a BSR.

In an implementation, the information about the data of the target type is configured to indicate that the currently buffered uplink data includes the data of the target type, and indicate the logical channel or the logical channel group in which the data of the target type is located, so that the network device performs a priority scheduling for the logical channel or the logical channel group in which the data of the target type is located.

For example, the first message is in a long buffer status report, and the information about the data of the target type is configured to indicate that the currently buffered uplink data includes the data of the target type, and indicate the logical channel or the logical channel group in which the data of the target type is located, so that the network device performs a priority scheduling for the logical channel or the logical channel group in which the data of the target type is located.

For example, the first message is a short buffer status report or a truncated buffer status report, and the information about the data of the target type is configured to indicate that the currently buffered uplink data includes the data of the target type, and indicate the logical channel or the logical channel group in which the data of the target type is located, so that the network device performs a priority scheduling for the logical channel or the logical channel group in which the data of the target type is located.

In an implementation, the information about the data of the target type is configured to indicate that the currently buffered uplink data includes the data of the target type, so that the network device performs a priority scheduling for the terminal device.

For example, the first message is a long buffer status report, and the information about the data of the target type is configured to indicate that the currently buffered uplink data includes the data of the target type, so that the network device performs a priority scheduling for the terminal device.

In 220, the terminal device transmits a first message to the network device, where the first message is configured to indicate the data amount of the currently buffered uplink data and information about the data of the target type.

In 230, the network device receives the first message transmitted by the terminal device.

In 240, the network device performs a scheduling for the terminal device according to the first message.

In an implementation, a priority scheduling is performed for the terminal device, or for the logical channel or the logical channel group in which the data of the target type is located, when the first message indicates that the currently buffered uplink data includes the data of the target type.

In an implementation, the information about the data of the target type is configured to indicate that the currently buffered uplink data includes the data of the target type, and indicate the logical channel or the logical channel group in which the data of the target type is located, and the network device performs a priority scheduling for the logical channel or the logical channel group in which the data of the target type is located.

For example, the first message is a long buffer status report, and the information about the data of the target type is configured to indicate that the currently buffered uplink data includes the data of the target type, and indicate the logical channel or the logical channel group in which the data of the target type is located, and the network device performs a priority scheduling for the logical channel or the logical channel group in which the data of the target type is located.

For example, the first message is a short buffer status report or a truncated buffer status report, and the information about the data of the target type is configured to indicate that the currently buffered uplink data includes the data of the target type, and indicate the logical channel or the logical channel group in which the data of the target type is located, and the network device performs a priority scheduling for the logical channel or the logical channel group in which the data of the target type is located.

In an implementation, the information about the data of the target type is configured to indicate that the currently buffered uplink data includes the data of the target type, and the network device performs a priority scheduling for the terminal device.

For example, the first message is a long buffer status report, and the information about the data of the target type is configured to indicate that the currently buffered uplink data includes the data of the target type, and the network device performs a priority scheduling for the terminal device.

In an implementation, the terminal device receives a second message that is transmitted by the network device according to the first message, where the second message is configured to perform a priority scheduling for the terminal device or a priority scheduling for the logical channel or the logical channel group in which the data of the target type is located; and transmits the currently buffered uplink data according to the second message.

In an implementation, the network device performs a priority scheduling for the logical channel or the logical channel group in which the data of the target type is located may refer to allocating more resources to the logical channel or the logical channel group, or scheduling the logical channel or logical channel group earlier.

In an implementation, the network device performs a priority scheduling for the terminal device may refer to the case that allocating more resources to the terminal device, or scheduling the terminal device earlier. In an implementation, the terminal device may use more resources to transmit the logical channel or the logical channel group in which the data of the target type is located according to resources allocated by the network device, or to transmit the logical channel or the logical channel group earlier.

Therefore, in the embodiment of the present application, a terminal device transmits, to a network device, a first message for indicating the data amount of the currently buffered uplink data and information about the data of the target type; the network device may perform a scheduling for the terminal device according to the information of the data of the target type, and more factors can be taken into account during scheduling, which can improve the communication performance.

FIG. 5 is a schematic block diagram of a terminal device 300 according to an embodiment of the present application. As shown in FIG. 5, the terminal device 300 includes a processing unit 310 and a communicating unit 320; where,
the processing unit 310 is configured to determine data amount of currently buffered uplink data and information about data of a target type in the currently buffered uplink data;
the communicating unit 320 is configured to transmit a first message to a network device, where the first message is configured to indicate the data amount of the currently buffered uplink data and the information about the data of the target type.

In an implementation, the information about the data of the target type includes at least one of the following:
information about whether the currently buffered uplink data includes the data of the target type;
the data amount of the data of the target type;
a logical channel or a logical channel group in which the data of the target type is located; and
a location of the data of the target type in the logical channel in which the data of the target type is located.

In an implementation, the data of the target type is data of intra-coded frame type.

In an implementation, the first message is a buffer status report.

In an implementation, the information about the data of the target type is configured to indicate that the currently buffered uplink data includes the data of the target type, and indicate the logical channel or the logical channel group in which the data of the target type is located, so that the network device performs a priority scheduling for the logical channel or the logical channel group in which the data of the target type is located.

In an implementation, the communicating unit 320 is further configured to:
receive a second message that is transmitted by the network device according to the first message, where the second message is configured to perform a priority scheduling for the terminal device or a priority scheduling for the logical channel or the logical channel group in which the data of the target type is located; and
transmit the currently buffered uplink data according to the second message.

It should be understood that the terminal device can perform corresponding operations performed by the terminal device shown in FIG. 4, which will not be repeated herein for the sake of brevity.

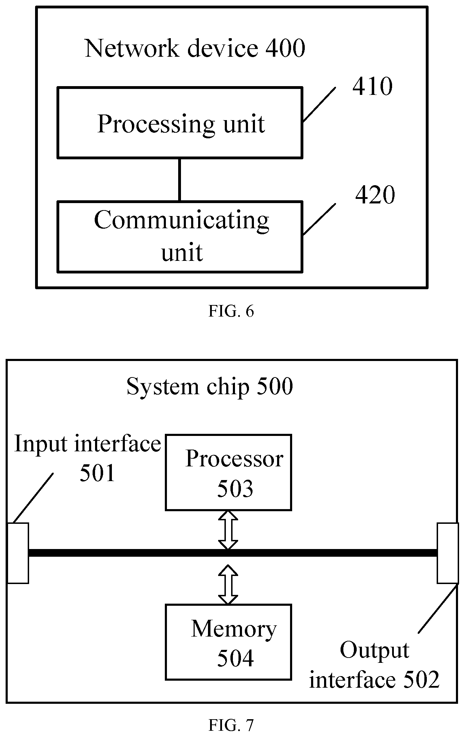

FIG. 6 is a schematic block diagram of a network device 400 according to an embodiment of the present application. As shown in FIG. 6, the network device 400 includes a processing unit 410 and a communicating unit 420; where,
the communicating unit 420 is configured to receive a first message transmitted by a terminal device, where the first message is configured to indicate data amount of the currently buffered uplink data in the terminal device and information about data of a target type in the currently buffered uplink data;
the processing unit 410 is configured to perform a scheduling for the terminal device according to the first message.

In an implementation, the information about the data of the target type includes at least one of the following:
information about whether the currently buffered uplink data includes the data of the target type;
data amount of the data of the target type;
a logical channel or a logical channel group in which the data of the target type is located; and
a location of the data of the target type in the logical channel or the logical channel group in which the data of the target type is located.

In an implementation, the processing unit 410 is further configured to:
perform a priority scheduling for the terminal device, or for the logical channel or the logical channel group in which the data of the target type is located, when the first message indicates that the currently buffered uplink data includes the data of the target type.

In an implementation, the data of the target type is data of intra-coded frame type.

In an implementation, the first message is a buffer status report.

In an implementation, the information about the data of the target type is configured to indicate that the currently buffered uplink data includes the data of the target type, and indicate the logical channel or the logical channel group in which the data of the target type is located;

The processing unit is further configured to:
perform a priority scheduling for the logical channel or the logical channel group in which the data of the target type is located according to the first message.

It should be understood that the network device can perform corresponding operations performed by the network device shown in FIG. 4, which will not be repeated herein for the sake of brevity.

FIG. 7 is a schematic structural diagram of a system chip 500 according to an embodiment of the present application. The system chip 500 of FIG. 7 includes an input interface 501, an output interface 502, a processor 503 and a memory 504 that can be connected with each other through an internal communication connection line. The processor 503 is configured to execute a code in the memory 504.

In an implementation, when the code is executed, the processor 503 implements the method performed by the network device in the method 200 shown in FIG. 4, which will not be repeated herein for the sake of brevity.

In an implementation, when the code is executed, the processor 503 implements the method performed by the terminal device in the method 200 shown in FIG. 4, which will not be repeated herein for the sake of brevity.

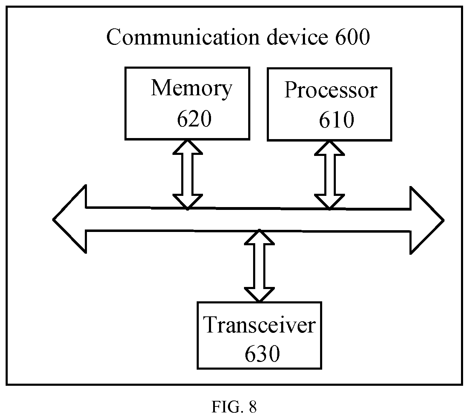

FIG. 8 is a schematic block diagram of a communication device 600 according to an embodiment of the present application. As shown in FIG. 8, the communication device 600 includes a processor 610 and a memory 620. The memory 620 can store a program code, and the processor 610 can execute the program code stored in the memory 620.

In an implementation, as shown in FIG. 8, the communication device 600 may include a transceiver 630, and the processor 610 may control the transceiver 630 to communicate externally.

In an implementation, the processor 610 may call the program code stored in the memory 620 to perform corresponding operations of the network device in the method 200 of FIG. 4, which will not be repeated herein for the sake of brevity.

In an implementation, the processor 610 may call the program code stored in the memory 620 to perform corresponding operations of the terminal device in the method 200 of FIG. 4, which will not be repeated herein for the sake of brevity.

It should be understood that the processor of the embodiment of the present application may be an integrated circuit chip with signal processing capability. In a process of implementation, each step of the foregoing method embodiments may be done by an integrated logic circuit of hardware in a processor or an instruction in a form of software. The processor may be a general purpose processor, a digital signal processor (DSP), an application specific integrated circuit (ASIC), a field programmable gate array (FPGA), a programming logic device, a discrete gate, a transistor logic device, or a discrete hardware component. The methods, steps, and logical block diagrams disclosed in the embodiments of the present application can be implemented or executed. The general purpose processor may be a microprocessor or any conventional processor or the like. The steps of the method disclosed in the embodiments of the present application may be directly implemented by a hardware decoding processor, or may be implemented by a combination of hardware and software modules in the decoding processor. The software module can be located in a conventional storage medium such as a random access memory, a flash memory, a read only memory, a programmable read only memory or an electrically erasable programmable memory, a register, and the like. The storage medium is located in the memory, and the processor reads information in the memory and performs the steps of the above method in conjunction with its hardware.

It is to be understood that the memory in the embodiments of the present application may be a volatile memory or a non-volatile memory, or may include both volatile and non-volatile memory. The non-volatile memory may be a read-only memory (ROM), a programmable ROM (PROM), an erasable PROM (EPROM), or an electrically EPROM (EEPROM) or a flash memory. The volatile memory can be a random access memory (RAM) that acts as an external cache. By way of example and not limitation, many forms of RAM are available, such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM) ) and direct rambus RAM (DR RAM). It should be noted that the memory according to the systems and method described herein are intended to include, without being limited to, these and any other suitable types of memory.

Those of ordinary skill in the art will appreciate that elements and algorithm steps of the various examples described in connection with the embodiments disclosed herein can be implemented in electronic hardware or a combination of computer software and electronic hardware. Whether these functions are implemented in hardware or software depends on a specific application and design constraints of the technical scheme. Professionals can use different methods for each specific application to implement the described functionality, but this kind of implementation should not be considered beyond the scope of the present application.

A person skilled in the art can clearly understand that for the convenience and brevity of the description, specific working processes of a system, a device and a unit described above can refer to the corresponding processes in the foregoing method embodiments, and details are not described herein again.

In the several embodiments provided by the present application, it should be understood that the disclosed system, device, and method may be implemented in other manners. For example, the device embodiments described above are merely illustrative. For example, the division of the unit is only a logical function division, in actual implementation, there may be another division manner, for example, multiple units or components may be combined or can be integrated into another system, or some features can be ignored or not executed. In addition, the mutual coupling or direct coupling or communication connection shown or discussed may be an indirect coupling or communication connection through some interfaces, devices or units, and may be electrical, mechanical or otherwise.

The units described as separate components may or may not be physically separated, and the components displayed as units may or may not be physical units, that is, may be located in one site, or may be distributed to multiple network units. Some or all of the units may be selected according to actual needs to achieve the purpose of the solution of the embodiments.

Furthermore, each functional unit in the embodiments of the present application may be integrated into one processing unit, or each unit may be separate physically, or two or more units may be integrated into one unit.

The functions may be stored in a computer readable storage medium if implemented in the form of a software functional unit and sold or used as a standalone product. Based on such understanding, the technical solution of the present application, in nature, or which makes contributions to the prior art, or a part of the technical solution, may be embodied in the form of a software product, which is stored in a storage medium, where a plurality of instructions are included to cause a computer device (which may be a personal computer, a server, or a network device, etc.) to perform all or part of the steps of the method described in the embodiments of the present application. The foregoing storage medium includes: a USB flash disk, a mobile hard disk, a read-only memory (ROM), a random access memory (RAM), a magnetic disk, or an optical disk, and the like which can store program codes.

The foregoing description is only specific embodiments of the present application; the scope of protection of the present application shall be subject to the scope of protection of the claims.

## Claims

1. A wireless communication method (200), comprising:
determining (210), by a terminal device, data amount of currently buffered uplink data and information about data of a target type in the currently buffered uplink data, wherein the data of the target type is data of intra-coded frame type; and
transmitting (220), by the terminal device, a first message to a network device, wherein the first message is configured to indicate the data amount of the currently buffered uplink data and the information about the data of the target type;
wherein the information about the data of the target type comprises a location of the data of the target type in the logical channel in which the data of the target type is located, and the location of the data of the target type in the logical channel in which the data of the target type is located is configured to indicate data amount in the logical channel in which the data of the target type is located before the data of the target type.

2. The method (200) of claim 1, wherein the information about the data of the target type further comprises at least one of the following:
information about whether the currently buffered uplink data comprises the data of the target type;
data amount of the data of the target type; and
a logical channel or a logical channel group in which the data of the target type is located.

3. The method (200) of claim 1 or 2, wherein the first message is a buffer status report.

4. The method (200) of claim 3, wherein the buffer status report is a long buffer status report, a short buffer status report, or a truncated buffer status report.

5. The method (200) of any one of claims 1 to 4, wherein the method further comprises:
receiving, by the terminal device, a second message that is transmitted by the network device according to the first message, wherein the second message is configured to perform a priority scheduling for the terminal device or a priority scheduling for the logical channel or the logical channel group in which the data of the target type is located; and
transmitting, by the terminal device, the currently buffered uplink data according to the second message.

6. A terminal device (300), comprising: a processing unit (310) and a communicating unit (320); wherein
the processing unit (310) is configured to determine data amount of currently buffered uplink data and information about data of a target type in the currently buffered uplink data, wherein the data of the target type is data of intra-coded frame type; and
the communicating unit (320) is configured to transmit a first message to a network device, wherein the first message is configured to indicate the data amount of the currently buffered uplink data and the information about the data of the target type;
wherein the information about the data of the target type comprises a location of the data of the target type in the logical channel in which the data of the target type is located, and the location of the data of the target type in the logical channel in which the data of the target type is located is configured to indicate data amount in the logical channel in which the data of the target type is located before the data of the target type.

7. The terminal device (300) of claim 6, wherein the information about the data of the target type further comprises at least one of the following:
information about whether the currently buffered uplink data comprises the data of the target type;
data amount of the data of the target type; and
a logical channel or a logical channel group in which the data of the target type is located.

8. The terminal device (300) of claim 6 or 7, wherein the first message is a buffer status report.

9. The terminal device (300) of claim 8, wherein the buffer status report is a long buffer status report, a short buffer status report, or a truncated buffer status report.

10. The terminal device (300) of any one of claims 6 to 9, wherein the communicating unit (320) is further configured to:
receive a second message that is transmitted by the network device according to the first message, wherein the second message is configured to perform a priority scheduling for the terminal device (300) or a priority scheduling for the logical channel or the logical channel group in which the data of the target type is located; and
transmit the currently buffered uplink data according to the second message.

11. A network device (400), comprising: a processing unit (410) and a communicating unit (420); wherein
the communicating unit (420) is configured to receive a first message transmitted by the terminal device, wherein the first message is configured to indicate data amount of currently buffered uplink data in the terminal device and information about data of a target type in the currently buffered uplink data, wherein the data of the target type is data of intra-coded frame type; and
the processing unit (410) is configured to perform a scheduling for the terminal device according to the first message;
wherein the information about the data of the target type comprises a location of the data of the target type in the logical channel in which the data of the target type is located, and the location of the data of the target type in the logical channel in which the data of the target type is located is configured to indicate data amount in the logical channel in which the data of the target type is located before the data of the target type.

12. The network device (400) of claim 11, wherein the information about the data of the target type further comprises at least one of the following:
information about whether the currently buffered uplink data comprises the data of the target type;
data amount of the data of the target type; and
a logical channel or a logical channel group in which the data of the target type is located.

13. The network device (400) of claim 12, wherein the processing unit (410) is further configured to:
perform a priority scheduling for the terminal device, or for the logical channel or the logical channel group in which the data of the target type is located, when the first message indicates that the currently buffered uplink data comprises the data of the target type.

14. The network device (400) of any one of claims 11 to 13, wherein the first message is a buffer status report.

15. The network device (400) of any one of claims 11 to 14, wherein the information about the data of the target type is configured to indicate that the currently buffered uplink data comprises the data of the target type, and indicate the logical channel or the logical channel group in which the data of the target type is located; and
the processing unit (410) is further configured to:
perform a priority scheduling for the logical channel or the logical channel group in which the data of the target type is located according to the first message.

## Patentansprüche

1. Drahtloskommunikationsverfahren (200), das umfasst:
Bestimmen (210), durch eine Endgerätvorrichtung, einer Datenmenge von derzeit gepufferten Aufwärtsstrecken-Daten und von Information über Daten eines Zieltyps in den derzeit gepufferten Aufwärtsstrecken-Daten, wobei die Daten des Zieltyps Daten eines intrakodierten Frametyps sind; und
Übertragen (220), durch die Endgerätvorrichtung, einer ersten Nachricht an eine Netzwerkvorrichtung, wobei die erste Nachricht konfiguriert ist, die Datenmenge der derzeit gepufferten Aufwärtsstrecken-Daten und die Information über die Daten des Zieltyps anzuzeigen;
wobei die Information über die Daten des Zieltyps einen Ort der Daten des Zieltyps in dem logischen Kanal umfasst, in dem sich die Daten des Zieltyps befinden, und der Ort der Daten des Zieltyps in dem logischen Kanal, in dem sich die Daten des Zieltyps befinden, konfiguriert ist, eine Datenmenge in dem logischen Kanal, in dem sich die Daten des Zieltyps befinden, vor den Daten des Zieltyps anzuzeigen.

2. Verfahren (200) nach Anspruch 1, wobei die Information über die Daten des Zieltyps ferner mindestens eines der Folgenden umfasst:
Information darüber, ob die derzeit gepufferten Aufwärtsstrecken-Daten die Daten des Zieltyps umfassen;
eine Datenmenge der Daten des Zieltyps; und
einen logischen Kanal oder eine logische Kanalgruppe, in dem/der sich die Daten des Zieltyps befinden.

3. Verfahren (200) nach Anspruch 1 oder 2, wobei die erste Nachricht ein Pufferstatusbericht ist.

4. Verfahren (200) nach Anspruch 3, wobei der Pufferstatusbericht ein langer Pufferstatusbericht, ein kurzer Pufferstatusbericht oder ein verkürzter Pufferstatusbericht ist.

5. Verfahren (200) nach einem der Ansprüche 1 bis 4, wobei das Verfahren ferner umfasst:
Empfangen, durch die Endgerätvorrichtung, einer zweiten Nachricht, die durch die Netzwerkvorrichtung gemäß der ersten Nachricht übertragen wird, wobei die zweite Nachricht konfiguriert ist, eine Prioritätsplanung für die Endgerätvorrichtung oder eine Prioritätsplanung für den logischen Kanal oder die logische Kanalgruppe durchzuführen, in der/dem sich die Daten des Zieltyps befinden; und
Übertragen, durch die Endgerätvorrichtung, der derzeit gepufferten Aufwärtsstrecken-Daten gemäß der zweiten Nachricht.

6. Endgerätvorrichtung (300), die umfasst: eine Verarbeitungseinheit (310) und eine Kommunikationseinheit (320); wobei
die Verarbeitungseinheit (310) zum Bestimmen einer Datenmenge von derzeit gepufferten Aufwärtsstrecken-Daten und von Information über Daten eines Zieltyps in den derzeit gepufferten Aufwärtsstrecken-Daten konfiguriert ist, wobei die Daten des Zieltyps Daten eines intrakodierten Frametyps sind; und
die Kommunikationseinheit (320) zum Übertragen einer ersten Nachricht an eine Netzwerkvorrichtung konfiguriert ist, wobei die erste Nachricht konfiguriert ist, die Datenmenge der derzeit gepufferten Aufwärtsstrecken-Daten und die Information über die Daten des Zieltyps anzuzeigen;
wobei die Information über die Daten des Zieltyps einen Ort der Daten des Zieltyps in dem logischen Kanal umfasst, in dem sich die Daten des Zieltyps befinden, und der Ort der Daten des Zieltyps in dem logischen Kanal, in dem sich die Daten des Zieltyps befinden, konfiguriert ist, eine Datenmenge in dem logischen Kanal, in dem sich die Daten des Zieltyps befinden, vor den Daten des Zieltyps anzuzeigen.

7. Endgerätvorrichtung (300) nach Anspruch 6, wobei die Information über die Daten des Zieltyps ferner mindestens eines der Folgenden umfasst:
Information darüber, ob die derzeit gepufferten Aufwärtsstrecken-Daten die Daten des Zieltyps umfassen;
eine Datenmenge der Daten des Zieltyps; und
einen logischen Kanal oder eine logische Kanalgruppe, in dem/der sich die Daten des Zieltyps befinden.

8. Endgerätvorrichtung (300) nach Anspruch 6 oder 7, wobei die erste Nachricht ein Pufferstatusbericht ist.

9. Endgerätvorrichtung (300) nach Anspruch 8, wobei der Pufferstatusbericht ein langer Pufferstatusbericht, ein kurzer Pufferstatusbericht oder ein verkürzter Pufferstatusbericht ist.

10. Endgerätvorrichtung (300) nach einem der Ansprüche 6 bis 9, wobei die Kommunikationseinheit (320) ferner zu Folgendem konfiguriert ist:
Empfangen einer zweiten Nachricht, die durch die Netzwerkvorrichtung gemäß der ersten Nachricht übertragen wird, wobei die zweite Nachricht konfiguriert ist, eine Prioritätsplanung für die Endgerätvorrichtung (300) oder eine Prioritätsplanung für den logischen Kanal oder die logische Kanalgruppe durchzuführen, in der/dem sich die Daten des Zieltyps befinden; und
Übertragen der derzeit gepufferten Aufwärtsstrecken-Daten gemäß der zweiten Nachricht.

11. Netzwerkvorrichtung (400), die umfasst: eine Verarbeitungseinheit (410) und eine Kommunikationseinheit (420); wobei
die Kommunikationseinheit (420) zum Empfangen einer durch die Endgerätvorrichtung übertragenen ersten Nachricht konfiguriert ist, wobei die erste Nachricht konfiguriert ist, eine Datenmenge von derzeit gepufferten Aufwärtsstrecken-Daten in der Endgerätvorrichtung und eine Information über die Daten des Zieltyps in den derzeit gepufferten Aufwärtsstrecken-Daten anzuzeigen, wobei die Daten des Zieltyps Daten eines intrakodierten Frametyps sind; und
die Verarbeitungseinheit (410) zum Durchführen einer Planung für die Endgerätvorrichtung gemäß der ersten Nachricht konfiguriert ist;
wobei die Information über die Daten des Zieltyps einen Ort der Daten des Zieltyps in dem logischen Kanal umfasst, in dem sich die Daten des Zieltyps befinden, und der Ort der Daten des Zieltyps in dem logischen Kanal, in dem sich die Daten des Zieltyps befinden, konfiguriert ist, eine Datenmenge in dem logischen Kanal, in dem sich die Daten des Zieltyps befinden, vor den Daten des Zieltyps anzuzeigen.

12. Netzwerkvorrichtung (400) nach Anspruch 11, wobei die Information über die Daten des Zieltyps ferner mindestens eines der Folgenden umfasst:
Information darüber, ob die derzeit gepufferten Aufwärtsstrecken-Daten die Daten des Zieltyps umfassen;
eine Datenmenge der Daten des Zieltyps; und
einen logischen Kanal oder eine logische Kanalgruppe, in dem/der sich die Daten des Zieltyps befinden.

13. Netzwerkvorrichtung (400) nach Anspruch 12, wobei die Verarbeitungseinheit (410) ferner zu Folgendem konfiguriert ist:
Durchführen einer Prioritätsplanung für die Endgerätvorrichtung oder für den logischen Kanal oder die logische Kanalgruppe, in der/dem sich die Daten des Zieltyps befinden, wenn die erste Nachricht anzeigt, dass die derzeit gepufferten Aufwärtsstrecken-Daten die Daten des Zieltyps umfassen.

14. Netzwerkvorrichtung (400) nach einem der Ansprüche 11 bis 13, wobei die erste Nachricht ein Pufferstatusbericht ist.

15. Netzwerkvorrichtung (400) nach einem der Ansprüche 11 bis 14, wobei die Information über die Daten des Zieltyps konfiguriert ist, anzuzeigen, dass die derzeit gepufferten Aufwärtsstrecken-Daten die Daten des Zieltyps umfassen, und den logischen Kanal oder die logische Kanalgruppe anzuzeigen, in dem/der sich die Daten des Zieltyps befinden; und
wobei die Verarbeitungseinheit (410) ferner zu Folgendem konfiguriert ist:
Durchführen einer Prioritätsplanung für den logischen Kanal oder die logische Kanalgruppe, in dem/der sich die Daten des Zieltyps befinden, gemäß der ersten Nachricht.

## Revendications

1. Procédé de communication sans fil (200), comprenant :
la détermination (210), par un dispositif terminal, d'une quantité de données de données de liaison montante actuellement mises en mémoire tampon et d'informations relatives à des données d'un type cible dans les données de liaison montante actuellement mises en mémoire tampon, les données du type cible étant des données de type de trame intra-codée ; et
la transmission (220), par le dispositif terminal, d'un premier message à un dispositif de réseau, le premier message étant configuré pour indiquer la quantité de données des données de liaison montante actuellement mises en mémoire tampon et les informations relatives aux données du type cible ;
dans lequel les informations relatives aux données du type cible comprennent un emplacement des données du type cible dans le canal logique dans lequel se trouvent les données du type cible, et l'emplacement des données du type cible dans le canal logique dans lequel se trouvent les données du type cible est configuré pour indiquer une quantité de données dans le canal logique dans lequel se trouvent les données du type cible avant les données du type cible.

2. Procédé (200) selon la revendication 1, dans lequel les informations relatives aux données du type cible comprennent en outre au moins les informations suivantes :
des informations indiquant que les données de liaison montante actuellement mises en mémoire tampon comprennent ou non les données du type cible ;
une quantité de données des données du type cible ; et
un canal logique ou un groupe de canaux logiques dans lequel se trouvent les données du type cible.

3. Procédé (200) selon la revendication 1 ou 2, dans lequel le premier message est un rapport d'état de mémoire tampon.

4. Procédé (200) selon la revendication 3, dans lequel le rapport d'état de mémoire tampon est un long rapport d'état de mémoire tampon, un court rapport d'état de mémoire tampon ou un rapport d'état de mémoire tampon tronqué.

5. Procédé (200) selon l'une quelconque des revendications 1 à 4, le procédé comprenant en outre :
la réception, par le dispositif terminal, d'un second message transmis par le dispositif de réseau en fonction du premier message, le second message étant configuré pour réaliser une programmation prioritaire pour le dispositif terminal ou une programmation prioritaire pour le canal logique ou le groupe de canaux logiques dans lequel se trouvent les données du type cible ; et
la transmission, par le dispositif terminal, des données de liaison montante actuellement mises en mémoire tampon en fonction du second message.

6. Dispositif terminal (300), comprenant : une unité de traitement (310) et une unité de communication (320) ; dans lequel
l'unité de traitement (310) est configurée pour déterminer une quantité de données de données de liaison montante actuellement mises en mémoire tampon et des informations relatives à des données d'un type cible dans les données de liaison montante actuellement mises en mémoire tampon, les données du type cible étant des données de type de trame intra-codée ; et
l'unité de communication (320) est configurée pour transmettre un premier message à un dispositif de réseau, le premier message étant configuré pour indiquer la quantité de données des données de liaison montante actuellement mises en mémoire tampon et les informations relatives aux données du type cible ;
dans lequel les informations relatives aux données du type cible comprennent un emplacement des données du type cible dans le canal logique dans lequel se trouvent les données du type cible, et l'emplacement des données du type cible dans le canal logique dans lequel se trouvent les données du type cible est configuré pour indiquer une quantité de données dans le canal logique dans lequel se trouvent les données du type cible avant les données du type cible.

7. Dispositif terminal (300) de la revendication 6, dans lequel les informations relatives aux données du type cible comprennent en outre au moins l'une des informations suivantes :
des informations indiquant que les données de liaison montante actuellement mises en mémoire tampon comprennent ou non les données du type cible ;
une quantité de données des données du type cible ; et
un canal logique ou un groupe de canaux logiques dans lequel se trouvent les données du type cible.

8. Dispositif terminal (300) selon la revendication 6 ou 7, dans lequel le premier message est un rapport d'état de mémoire tampon.

9. Dispositif terminal (300) selon la revendication 8, dans lequel le rapport d'état de mémoire tampon est un long rapport d'état de mémoire tampon, un court rapport d'état de mémoire tampon ou un rapport d'état de mémoire tampon tronqué.

10. Dispositif terminal (300) selon l'une quelconque des revendications 6 à 9, dans lequel l'unité de communication (320) est en outre configurée pour :
recevoir un second message transmis par le dispositif de réseau en fonction du premier message, le second message étant configuré pour réaliser une programmation prioritaire pour le dispositif terminal (300) ou une programmation prioritaire pour le canal logique ou le groupe de canaux logiques dans lequel se trouvent les données du type cible ; et
transmettre les données de liaison montante actuellement mises en mémoire tampon en fonction du second message.

11. Dispositif de réseau (400), comprenant : une unité de traitement (410) et une unité de communication (420) ; dans lequel
l'unité de communication (420) est configurée pour recevoir un premier message transmis par le dispositif terminal, le premier message étant configuré pour indiquer une quantité de données de données de liaison montante actuellement mises en mémoire tampon dans le dispositif terminal et des informations relatives à des données d'un type cible dans les données de liaison montante actuellement mises en mémoire tampon, les données du type cible étant des données de type de trame intra-codée ; et
l'unité de traitement (410) est configurée pour réaliser une programmation pour le dispositif terminal en fonction du premier message ;
dans lequel les informations relatives aux données du type cible comprennent un emplacement des données du type cible dans le canal logique dans lequel se trouvent les données du type cible et l'emplacement des données du type cible dans le canal logique dans lequel se trouvent les données du type cible est configuré pour indiquer une quantité de données dans le canal logique dans lequel se trouvent les données du type cible avant les données du type cible.

12. Dispositif de réseau (400) selon la revendication 11, dans lequel les informations relatives aux données du type cible comprennent en outre au moins l'une des informations suivantes :
des informations indiquant que les données de liaison montante actuellement mises en mémoire tampon comprennent ou non les données du type cible ;
une quantité de données des données du type cible ; et
un canal logique ou un groupe de canaux logiques dans lequel se trouvent les données du type cible.

13. Dispositif de réseau (400) selon la revendication 12, dans lequel l'unité de traitement (410) est en outre configurée pour :
réaliser une programmation prioritaire pour le dispositif terminal, ou pour le canal logique ou le groupe de canaux logiques dans lequel se trouvent les données du type cible, lorsque le premier message indique que les données de liaison montante actuellement mises en mémoire tampon comprennent les données du type cible.

14. Dispositif de réseau (400) selon l'une des revendications 11 à 13, dans lequel le premier message est un rapport d'état de mémoire tampon.

15. Dispositif de réseau (400) selon l'une quelconque des revendications 11 à 14, dans lequel les informations relatives aux données du type cible sont configurées pour indiquer que les données de liaison montante actuellement mises en mémoire tampon comprennent les données du type cible, et indiquer le canal logique ou le groupe de canaux logiques dans lequel se trouvent les données du type cible ; et
l'unité de traitement (410) est en outre configurée pour :
réaliser une programmation prioritaire pour le canal logique ou le groupe de canaux logiques dans lequel se trouvent les données du type cible en fonction du premier message.
